# DEMANDE DE BREVET EUROPEEN

(11) **EP 4 636 506 A1**
(43) Date de publication de la demande: **22.10.2025**
(21) Numéro de dépôt: 24170647.2
(22) Date de dépôt: 16.04.2024
(51) Int. Cl.: G04B 1/16, B23B 1/00, B24B 1/00, G04B 13/02, G04B 31/06, G04D 3/02

(54) **PROCÉDÉ DE FABRICATION D'UN COMPOSANT HORLOGER**

(71) Demandeur: ROLEX SA, 1211 Genève 26 (CH)
(72) Inventeur: PAVONE, Remo, 1785 Cressier (CH)
(74) Mandataire: Moinas & Savoye SARL

(57) **Abrégé**

Procédé de fabrication d'un composant horloger, caractérisé en ce qu'il comprend les étapes suivantes :
- Se munir d'un bloc à usiner en céramique ou à base de céramique ;
- Usiner le bloc à l'aide d'un dispositif d'usinage comprenant un outil mécanique de coupe agissant en contact direct sur le bloc de sorte à enlever des copeaux du bloc,
et en ce que
l'étape consistant à usiner le bloc met en oeuvre une broche sur laquelle le bloc est fixé et entraîné en rotation, à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives, pour former un composant horloger présentant une symétrie de révolution.

## Description

La présente invention concerne un procédé de fabrication d'un composant horloger. Elle porte aussi sur un dispositif d'usinage qui met en oeuvre un tel procédé de fabrication.

La réalisation d'un composant horloger nécessite de trouver un bon compromis entre les exigences suivantes :
- Un matériau performant, qui répond au minimum aux exigences mécaniques élevées imposées par l'application horlogère ;
- Un procédé de fabrication suffisamment simple pour envisager une mise en oeuvre à grande échelle, de manière fiable et robuste.

Une première solution existante consiste à fabriquer un composant horloger en métal par un procédé de décolletage, impliquant un outil mécanique de coupe qui agit directement au contact avec un bloc initial, pour le mettre en forme par enlèvement de matière. Cet outil de coupe vient au contact direct avec le bloc, au contraire d'un usinage laser dans lequel un faisceau laser permet d'agir à distance sur un tel bloc. Un tel procédé permet d'atteindre une grande précision de manière rapide et bien maîtrisée. Le métal présente toutefois, selon l'alliage utilisé, l'inconvénient d'être sensible aux champs magnétiques, ce qui peut induire des problèmes de fiabilité de la marche d'une montre dans certaines circonstances d'utilisation. D'autre part, le métal n'est pas toujours suffisamment dur et nécessite des opérations complémentaires pour augmenter sa dureté, et parfois son état de surface, ce qui complexifie finalement le procédé de fabrication. Finalement, certains alliages amagnétiques et durs se révèlent être trop difficiles à usiner, car entrainant une trop forte usure des outils de coupe.

Une deuxième solution existante repose sur le choix d'un matériau amagnétique très rigide, comme une céramique, qui ne présente pas certains défauts du métal de la première solution. Toutefois, la fabrication d'un composant horloger en céramique nécessite un procédé plus complexe, impliquant en général un usinage laser, qui est plus délicat à maîtriser et plus lent qu'un usinage traditionnel.

Ainsi, la présente invention a pour objet de proposer une solution de fabrication d'un composant horloger qui répond au mieux aux exigences susmentionnées et améliore les solutions existantes.

Plus précisément, l'invention a pour objet de définir une solution de fabrication d'un composant horloger permettant de fabriquer simplement et de manière fiable et robuste un composant horloger aux propriétés mécaniques optimisées.

A cet effet, l'invention repose sur un procédé de fabrication d'un composant horloger, caractérisé en ce qu'il comprend les étapes suivantes :
- Se munir d'un bloc à usiner en céramique ou à base de céramique ;
- Usiner le bloc à l'aide d'un dispositif d'usinage comprenant un outil mécanique de coupe agissant en contact direct sur le bloc de sorte à enlever des copeaux du bloc,
et en ce que
l'étape consistant à usiner le bloc met en oeuvre une broche sur laquelle le bloc est fixé et entraîné en rotation, à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives, pour former un composant horloger présentant une symétrie de révolution.

L'invention porte aussi sur un dispositif d'usinage comprenant au moins une broche configurée pour maintenir un bloc à usiner et un outil mécanique de coupe configuré pour agir en contact direct sur le bloc à usiner de sorte à enlever des copeaux du bloc à usiner, caractérisé en ce que le dispositif d'usinage comprend un moteur relié à l'au moins une broche et/ou à l'outil mécanique de sorte à l'entraîner en rotation, pour mettre en oeuvre le procédé de fabrication d'un composant horloger selon l'une des revendications précédentes,
le moteur étant configuré pour entraîner en rotation la au moins une broche à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives.

L'invention est plus particulièrement définie par les revendications.

Ces objets, caractéristiques et avantages de la présente invention seront exposés en détail dans la description suivante d'un mode de réalisation particulier fait à titre non-lim itatif.

Pour simplifier la description, nous utiliserons par convention la direction longitudinale pour la direction principale le long de laquelle s'étend un composant horloger considéré, par exemple un axe de révolution d'un composant horloger, ou plus généralement un axe principal, par exemple considéré selon la direction de plus grande dimension du composant horloger. L'adjectif « transversal » sera utilisé pour désigner une direction perpendiculaire à la direction longitudinale.

Le concept de l'invention consiste à utiliser un procédé de fabrication basé sur un usinage non conventionnel, notamment sur un décolletage non conventionnel, en impliquant une très grande vitesse relative entre un bloc à usiner, notamment un barreau à usiner, et un outil mécanique de coupe, qui vient au contact avec le bloc à usiner. Les décolleteuses traditionnelles, telles qu'utilisées dans l'état de la technique pour fabriquer des composants horlogers en métal, sont totalement inadaptées à l'utilisation de matériaux très rigides, fragiles et durs comme une céramique, notamment à base de zircone. En effet, une telle utilisation entrainerait une usure catastrophique des outils mécaniques de coupe, voire la casse de ces outils mécaniques de coupe et/ou du bloc à usiner, expliquant pourquoi une telle solution n'existe pas. Par exemple, des essais d'usinage d'un alliage métallique très dur connu par sa dénomination P2000 lors d'un usinage traditionnel dans lequel un bloc en P2000 est entraîné à une vitesse de rotation de 12000 tours/minute a permis de fabriquer seulement 150 pièces avant de nécessiter le changement de l'outil de coupe. Selon l'invention, il a été découvert contre toute attente qu'une très grande vitesse de rotation implémentée dans une décolleteuse permet de réduire fortement l'usure et la casse des outils mécaniques de coupe, même en utilisant un matériau de base très dur comme une céramique.

Un mode de réalisation de l'invention va maintenant être détaillé pour la fabrication d'un composant horloger présentant une symétrie de révolution, au moins sur une partie de sa longueur, autour d'un axe longitudinal.

Dans ce mode de réalisation, une machine-outil, aussi appelée décolleteuse, est utilisée, comprenant au moins une broche destinée au montage d'un bloc, notamment d'une barre ou d'un barreau, à usiner, à partir duquel le composant horloger va être formé par usinage, par enlèvement de matière. Cette broche est associée à un moteur destiné à entraîner la broche en rotation autour d'un axe de rotation. La broche comprend de plus un logement pour la fixation d'un bloc à usiner. Cette broche est donc un porte-pièce. Selon ce mode de réalisation, le moteur de la décolleteuse est adapté pour entraîner le bloc à usiner à une très grande vitesse de rotation sur lui-même, autour d'un axe qui correspond à l'axe longitudinal du futur composant horloger. Cette vitesse est supérieure à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute.

La machine ou dispositif d'usinage, aussi appelée décolleteuse, comprend de plus un outil mécanique de coupe, qui vient au contact direct avec le bloc à usiner pendant sa rotation, enlevant ainsi des copeaux de matière de manière symétrique autour de l'axe de rotation du bloc à usiner, qui formera l'axe de symétrie du futur composant horloger, qui va présenter une symétrie de révolution. L'outil de coupe permet ainsi d'enlever progressivement de la matière autour du bloc à usiner, en taillant ainsi sa circonférence et sculptant progressivement le bloc à usiner jusqu'à atteindre le composant horloger final. Avantageusement, l'outil de coupe passe plusieurs fois au même endroit, pour enlever des copeaux de très faible épaisseur, par exemple de moins de 5 µm d'épaisseur, voire de moins de 2 µm, voire de moins de 1 µm, à chaque passe. Ainsi, le résultat obtenu est de très grande précision. De manière surprenante, plus la vitesse de rotation du bloc à usiner est importante, selon les valeurs susmentionnées, moins il y a d'usure de l'outil mécanique de coupe, qui permet ainsi de devenir compatible avec une telle solution de fabrication.

Cet outil de coupe peut conserver des géométries et matériaux habituels, notamment présenter une surface de coupe dans un matériau rigide et/ou dur, par exemple des plaquettes de coupe en diamant naturel ou synthétique, tel un diamant synthétique polycristallin comme le PCD.

Il apparaît qu'un tel procédé de fabrication permet de former des composants de très petite dimension, par exemple présentant des sections transversales de diamètre inférieur ou égal à 350 µm, voire de diamètre inférieur ou égal à 200 µm, voire inférieur ou égal à 100 µm, voire inférieur ou égal à 70 µm. Une telle réalisation de petites dimensions est très importante puisqu'obligatoire pour la fabrication d'un composant horloger, notamment d'un axe de balancier ou une tige d'ancre ou un arbre de barillet, tout ou partie d'un pignon, comme un pignon d'échappement ou un pignon du rouage. Plus généralement, le procédé de fabrication selon l'invention permet de former un composant horloger dont la section transversale de plus grande dimension est inscrite dans un cercle de diamètre inférieur ou égal à 2 mm, voire inférieur ou égal à 1 mm, voire inférieur ou égal à 0.4 mm, le bloc à usiner pouvant ainsi par exemple être un barreau de diamètre égal à 2 mm, ou 1 mm, ou 0.4 mm.

D'autre part, il apparaît que le procédé selon l'invention permet de fabriquer une géométrie donnée d'un composant horloger avec une grande précision et fiabilité, et une grande répétabilité dimensionnelle.

La broche de la décolleteuse est de plus prévue pour garantir la bonne fixation du bloc à usiner, sans déplacement de ce dernier malgré les efforts importants qu'il subit lors de l'opération d'usinage. De plus, la rigidité globale du dispositif d'usinage assure que, ni le bloc à usiner, ni les outils de coupe, ne vibrent ou ne se déforment, ce qui garantit une trajectoire contrôlée de l'outil de coupe. Pour optimiser la stabilité du dispositif d'usinage, une stratégie d'usinage qui minimise les efforts est préférée, notamment par la multiplication des passes de coupe qui enlèvent des très petits copeaux à chaque passe, comme détaillé précédemment.

D'autre part, avantageusement, le dispositif d'usinage met en oeuvre des accélérations et décélérations élevées et précises.

Selon un mode de réalisation avantageux, le dispositif d'usinage comprend un tour multibroches, c'est-à-dire comprend plusieurs broches qui fonctionnent en même temps, permettant une fabrication en parallèle de plusieurs composants horlogers par décomposition des opérations d'usinage entre les différentes broches.

L'invention ne se limite pas à la décolleteuse décrite précédemment, le même principe pouvant être mis en oeuvre par l'intermédiaire de tout tour d'usinage.

L'invention permet ainsi d'usiner de manière avantageuse un bloc en céramique, ce qui n'était pas possible dans l'état de la technique, et considéré comme impossible par la personne du métier. L'invention s'applique par exemple à partir d'un bloc à usiner intégralement ou à base de céramique. La céramique est préférentiellement une céramique frittée et durcie. Le bloc à usiner peut être à base de zircone, notamment de zircone yttriée, l'expression « à base de » signifiant qu'il comprend au moins 50% en poids de zircone. En variante, il peut être intégralement en zircone, notamment en zircone yttriée. En variante, il peut être à base d'alumine ou intégralement en alumine, intégralement ou à base d'un composite zircone-alumine, intégralement ou à base de carbure de silicium, intégralement ou à base de nitrure de silicium.

L'invention est plus généralement adaptée à l'usinage par retrait de matière de matière direct, à partir d'un bloc de dureté supérieure ou égale à 800 HV, voire supérieure ou égale à 1000 HV, voire supérieure ou égale à 1200 HV.

L'invention permet de plus avantageusement de fabriquer un composant horloger par la seule étape d'usinage décrite précédemment. Toutefois, elle peut être complétée par une étape optionnelle de terminaison, particulièrement une étape de tribofinition du composant horloger. Une telle étape permet par exemple d'adapter l'état de surface d'une ou de plusieurs surfaces fonctionnelles du composant horloger, comme la rugosité Ra. Elle a toutefois un impact négligeable sur la géométrie globale du composant horloger. Notamment, une telle étape de terminaison modifie au maximum de 1%, voire au maximum de 0.5%, voire au maximum de 0.1%, la dimension d'une section transversale du composant horloger issu de l'étape d'usinage décrite précédemment. En fin de procédé, une surface fonctionnelle du composant horloger peut présenter une rugosité Ra inférieure ou égale à 0.5 µm, voire inférieure ou égale à 0.1 µm, voire inférieure ou égale à 50 nm, voire inférieure ou égale à 20 nm, voire inférieure ou égale à 15 nm.

Autrement dit, l'invention est particulièrement avantageuse en ce que l'étape d'usinage permet de former la géométrie complète et finale, ou quasi-finale, du composant horloger, et non pas seulement une ébauche. Ainsi, le seul usinage décrit précédemment permet d'atteindre la dimension finale du composant horloger, ou la dimension finale d'au moins une portion fonctionnelle du composant horloger, voire une partie de la dimension finale d'au moins une portion fonctionnelle du composant horloger différente de moins de 1%, voire de moins de 0.5%, voire de moins de 0.1%, de la dimension finale de la au moins une portion fonctionnelle du composant horloger. On entend par « portion fonctionnelle du composant horloger » une portion du composant qui interagit avec un autre composant, notamment comme la portion de chassage pour accueillir par exemple une planche de mobile ou une roue de balancier ou un spiral, ou comme la portion de pivotement qui permet la rotation du composant dans une partie fixe (comme une pierre) qui lui sert de support, ou comme la partie de transmission formée par exemple par une denture.

Naturellement, l'invention peut être combinée avec tout autre procédé de fabrication existant, comme un fraisage ou une rectification, cet autre procédé pouvant servir à fabriquer une autre portion d'un composant horloger, ou la même portion, avant ou après la mise en oeuvre de l'invention, comme par exemple un pignon.

Dans tous les cas, l'invention permet de former au moins une portion fonctionnelle d'un composant horloger, dont au moins une section transversale est inscrite dans un cercle de diamètre inférieur ou égal à 200 µm, voire inférieur ou égal à 100 µm, voire inférieur ou égal à 70 µm. Elle permet aussi plus généralement de former un composant horloger, de petite dimension, dont la section transversale de plus grande dimension est inscrite dans un cercle de diamètre inférieur ou égal à 2 mm, voire inférieur ou égal à 1 mm, voire inférieur ou égal à 0.5 mm.

L'invention permet de fabriquer tout composant horloger, et particulièrement tout ou partie d'un axe horloger, comme un axe de balancier ou une tige d'ancre ou un arbre de barillet, tout ou partie d'un pignon, comme un pignon d'échappement ou un pignon du rouage.

L'invention porte aussi sur un dispositif d'usinage comprenant au moins une broche configurée pour maintenir un bloc à usiner et un outil mécanique de coupe configuré pour agir en contact direct sur le bloc à usiner de sorte à enlever des copeaux du bloc à usiner, caractérisé en ce que le dispositif d'usinage comprend un moteur relié à l'au moins une broche et/ou à l'outil mécanique de coupe de sorte à l'entraîner en rotation, pour mettre en oeuvre le procédé de fabrication d'un composant horloger tel que décrit précédemment, le moteur étant configuré pour entraîner en rotation la au moins une broche à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives.

## Revendications

1. Procédé de fabrication d'un composant horloger, **caractérisé en ce qu'**il comprend les étapes suivantes :
- Se munir d'un bloc à usiner en céramique ou à base de céramique ;
- Usiner le bloc à l'aide d'un dispositif d'usinage comprenant un outil mécanique de coupe agissant en contact direct sur le bloc de sorte à enlever des copeaux du bloc,
et **en ce que**
l'étape consistant à usiner le bloc met en oeuvre une broche sur laquelle le bloc est fixé et entraîné en rotation, à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives, pour former un composant horloger présentant une symétrie de révolution.

2. Procédé de fabrication d'un composant horloger selon la revendication précédente, **caractérisé en ce que** le bloc à usiner est intégralement en céramique frittée et durcie.

3. Procédé de fabrication d'un composant horloger selon la revendication précédente, **caractérisé en ce que** la céramique est à base de zircone, notamment de zircone yttriée, ou à base d'alumine, à base d'un composite zircone-alumine, à base de carbure de silicium, ou à base de nitrure de silicium.

4. Procédé de fabrication d'un composant horloger selon la revendication 1, **caractérisé en ce que** le bloc à usiner est de dureté supérieure ou égale à 800 HV, voire supérieure ou égale à 1000 HV, voire supérieure ou égale à 1200 HV.

5. Procédé de fabrication d'un composant horloger selon l'une des revendications précédentes, **caractérisé en ce que** l'étape consistant à usiner le bloc est un tournage mécanique réalisé par une décolleteuse dans laquelle le bloc à usiner est fixé sur une broche et entraîné en rotation, la décolleteuse étant une machine monobroche ou une machine multibroches.

6. Procédé de fabrication d'un composant horloger selon l'une des revendications précédentes, **caractérisé en ce que** l'outil mécanique de coupe agit sur le bloc à usiner par passes fines permettant d'enlever des copeaux de moins de 5 microns d'épaisseur lors d'une passe.

7. Procédé de fabrication d'un composant horloger selon l'une des revendications précédentes, **caractérisé en ce que** l'outil mécanique de coupe comprend un diamant naturel ou synthétique, notamment un diamant synthétique polycristallin.

8. Procédé de fabrication d'un composant horloger selon l'une des revendications précédentes, **caractérisé en ce qu'**il comprend une étape de terminaison du composant horloger, particulièrement une étape de tribofinition, qui modifie au maximum 1%, voire au maximum 0.5%, voire au maximum 0.1%, la dimension d'une section transversale du composant horloger issu de l'étape consistant à usiner le bloc.

9. Procédé de fabrication d'un composant horloger selon l'une des revendications 1 à 7, **caractérisé en ce que** l'étape consistant à usiner le bloc forme la géométrie finale du composant horloger, ou la dimension finale d'au moins une portion fonctionnelle du composant horloger, ou une partie de la dimension finale d'au moins une portion fonctionnelle du composant horloger différente de moins de 1%, voire de moins de 0.5%, voire de moins de 0.1%, de la dimension finale de la au moins une portion fonctionnelle du composant horloger.

10. Procédé de fabrication d'un composant horloger selon l'une des revendications précédentes, **caractérisé en ce qu'**il fabrique au moins une portion fonctionnelle du composant horloger de rugosité Ra inférieure ou égale à 0.5 µm, voire inférieure ou égale à 0.1 µm, voire inférieure ou égale à 50 nm, voire inférieure ou égale à 20 nm, voire inférieure ou égale à 15 nm.

11. Procédé de fabrication d'un composant horloger selon l'une des revendications précédentes, **caractérisé en ce qu'**il fabrique un composant horloger dont la section transversale de plus grande dimension est inscrite dans un cercle de diamètre inférieur ou égal à 2 mm, voire inférieur ou égal à 1 mm, voire inférieur ou égal à 0.5 mm, et/ou au moins une portion fonctionnelle du composant horloger dont au moins une section transversale est inscrite dans un cercle de diamètre inférieur ou égal à 200 µm, voire inférieur ou égal à 100 µm, voire inférieur ou égal à 70 µm.

12. Procédé de fabrication d'un composant horloger selon l'une des revendications précédentes, **caractérisé en ce qu'**il fabrique tout ou partie d'un axe horloger, comme un axe de balancier ou une tige d'ancre ou un arbre de barillet, tout ou partie d'un pignon, comme un pignon d'échappement ou un pignon du rouage.

13. Dispositif d'usinage comprenant au moins une broche configurée pour maintenir un bloc à usiner et un outil mécanique de coupe configuré pour agir en contact direct sur le bloc à usiner de sorte à enlever des copeaux du bloc à usiner, **caractérisé en ce que** le dispositif d'usinage comprend un moteur relié à l'au moins une broche et/ou à l'outil mécanique de sorte à l'entraîner en rotation, pour mettre en oeuvre le procédé de fabrication d'un composant horloger selon l'une des revendications précédentes,
le moteur étant configuré pour entraîner en rotation la au moins une broche à une vitesse supérieure ou égale à 30000 tours/minute, voire supérieure ou égale à 32000 tours/minute, voire supérieure ou égale à 35000 tours/minute, voire supérieure ou égale à 38000 tours/minute, voire supérieure ou égale à 40000 tours/minute, pendant que l'outil mécanique de coupe vient à son contact pour enlever de la matière par passes successives.
